# EUROPEAN PATENT APPLICATION

(11) **EP 1 797 944 A1**
(43) Date of publication of application: **20.06.2007**
(21) Application number: 05257677.4
(22) Date of filing: 14.12.2005
(51) Int. Cl.: B01D 53/50, B01D 53/74, B01D 53/75, B01D 53/79, B01D 53/18

(54) **An extraction device**

(71) Applicant: Atkins Limited, Epsom Surrey KT18 5BW (GB)
(72) Inventor: Young, John David, Falkirk, Scotland FK1 5QK (GB); Gilham, Steven, Ewell Village, Surrey KT17 1NA (GB); Woodburn, Peter John, London SW18 5UQ (GB)
(74) Representative: Findlay, Alice Rosemary

(57) **Abstract**

An extraction device, preferably a scrubbing device, for a gas comprising a diffuser for transmitting a gas through a surface of the diffuser and means for jetting a stream of liquid over the surface such that the gas impacts the stream of liquid. A method is also provided, including jetting a stream of liquid over a surface of a diffuser and transmitting a gas through the surface into the steam of liquid.

## Description

The present invention relates to an extraction device for a gas, such as a mass or heat transfer device, and particularly to a scrubbing device for scrubbing an impurity from a gas, for example, a gaseous impurity from a soluble gas.

The need to remove certain components from exhaust or process gas streams in industry arises from their potential to damage the environment or to create a toxic hazard. For example, sulphur compounds found in hydrocarbon fuels result in the release of sulphur dioxide following combustion of the fuel. Once released in this way the sulphur dioxide may be absorbed by water in the atmosphere and contribute to acid rain.

There is increasing pressure to reduce the level of impurities in exhaust gases as much as possible. Current regulations set maximum emission levels for various components, and these levels are expected to be lowered in the future.

Some impurities may be soluble in liquids, for example in water. It is common therefore to provide stages within chemical or industrial processes where gas streams containing the potentially hazardous or polluting impurities are mixed in some way with liquid streams to promote the absorption of the gas to hence create a gas-liquid solution that may subsequently be treated to reduce its harmful effects. Such processes are commonly known as washing or scrubbing processes.

A typical process uses fine mists or liquid sprays within a gas stream to expose the gas to small droplets of high surface area and hence promote absorption in that way. Also, it is known to generate bubbles of the gas to be scrubbed within a liquid bath to provide a path for gas to liquid absorption.

This is usually achieved by passing the gas through a plurality of holes in a plate and through water located above the plate. Another known process uses counter or co-flowing streams of gas and liquid where the contact surface area between the liquid and gas components is enhanced in some manner, for example by using so-called "packed beds".

The effectiveness of such systems varies considerably, and may depend upon the properties of the gases and liquids, such as solubility, reactivity, temperature, pH, etc.

Also, the processes used to mix the gases and liquids can generate flow energy losses within the system that are either detrimental to the overall system performance, or difficult or costly to counter-act by other, for example mechanical, means.

The present invention has been developed with these points in mind.

According to a first aspect of the present invention, an extraction device for a gas comprises a diffuser for transmitting a gas through a surface of the diffuser and means for jetting a stream of liquid over the surface such that the gas impacts the stream of liquid.

According to a second aspect of the present invention, a method of treating a gas comprises providing a diffuser, jetting a stream of liquid over a surface of the diffuser and transmitting a gas through the surface into the stream of liquid such that the gas impacts the stream of liquid causing turbulent mixing of the gas and the stream of liquid.

When a gas passes through the diffuser into the stream of liquid, the gas flow breaks up the flow of liquid and hence creates substantial turbulence, ensuring a high degree of mixing of the gas with the liquid. This generates a large number of bubbles which provide a very large surface area of liquid for contact with the gas. By jetting the stream of liquid over the surface, the liquid is provided with the energy needed to effectively mix with the gas, while keeping flow energy losses to a minimum.

The device and method can therefore be used to extract a variety of byproducts from a gas, such as mass and/or heat. For example, the device and method can be a transfer device and method respectively. However, it is preferred that the device is a scrubbing device for scrubbing an impurity from a gas and the method is a method of scrubbing an impurity from a gas. In certain examples, the impurity is sulphur dioxide.

Preferably, the stream of liquid is jetted transversely to a direction of flow of the gas. This reduces the potential for gas by-pass, which can significantly reduce the effectiveness of the device or method. This also achieves good mixing of the gas and liquid since there is increased turbulence.

At least one liquid inlet may be provided for jetting the stream of liquid over the surface. The inlet is optionally a nozzle or sprayer, though other suitable liquid dispensers can be used. In this way, a uniform stream of liquid is obtained across the diffuser.

The inlet may jet liquid linearly across the diffuser or radially inwardly towards a central point of the diffuser. However, it is preferred that the liquid is directed radially outwardly from the inlet.

Advantageously, the inlet has an opening for jetting liquid over the surface, the opening being located over a central zone of the diffuser. In this way, the liquid is jetted close to the diffuser surface and from the centre towards the periphery of the surface.

In a preferred embodiment, the diffuser is a plate having a plurality of openings extending through the plate, the plate being arranged generally perpendicularly to the direction of flow of the gas. The diameter of the holes is typically between 1 mm and 25 mm, and the percentage of the open area can be between 5% and 25% of the plate surface. In a preferred example, the hole diameter is 5 mm and the open area is 15%.

A wall may extend perpendicularly around a periphery of the diffuser so that the diffuser and the wall co-operate to form a recess in which the stream of liquid is located.

The present invention will now be described, by way of example only, with reference to the accompanying drawings, in which:
Figure 1 is an exploded perspective view of a scrubbing device according to one embodiment of the invention;
Figure 2 is a section through the scrubbing device shown in Figure 1;
Figure 3 is a section through a scrubbing system incorporating the scrubbing device of Figure 1;

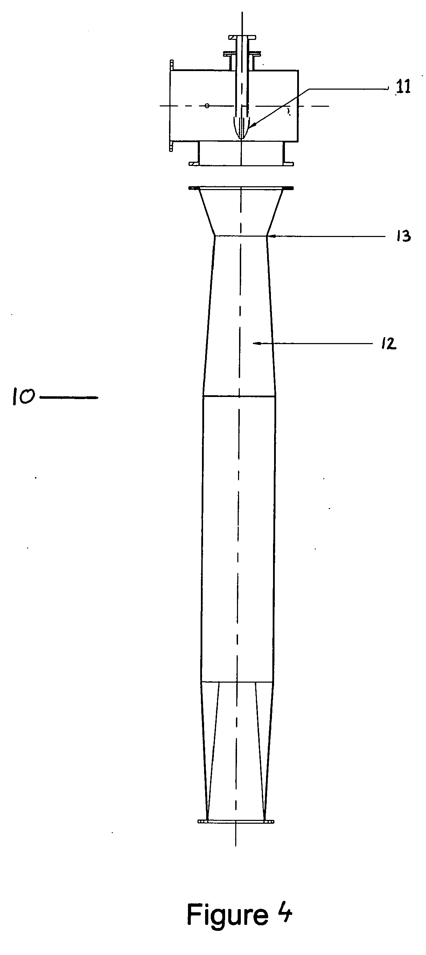

Figure 4 is a section through the quenching device shown in Figure 3.

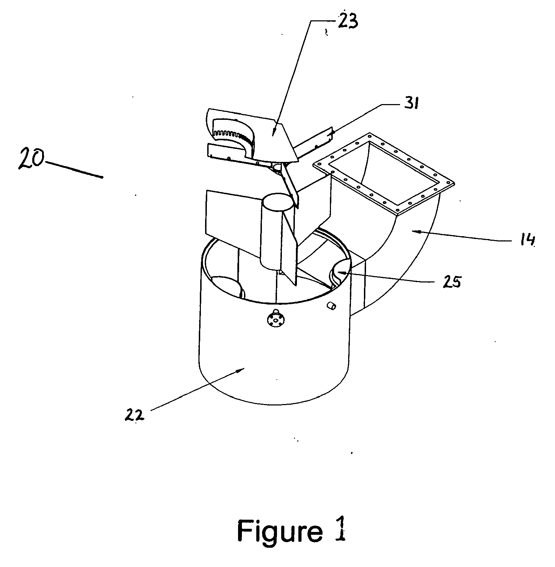

The scrubbing device 20 shown in Figure 1 comprises a diffuser 23 in the form of a plate located in a sump 22 just below the upper end of the sump so that the walls of the sump and the plate co-operate to form a recess 24. Three downcommers 25, which are sections of pipe, are attached to the sump wall to form a flow path between the top of the plate and the sump. The downcommers 25 protrude above the plate and carry seawater from the top of the plate to the sump. A gas inlet 21 feeds gas into the device, beneath the plate 23.

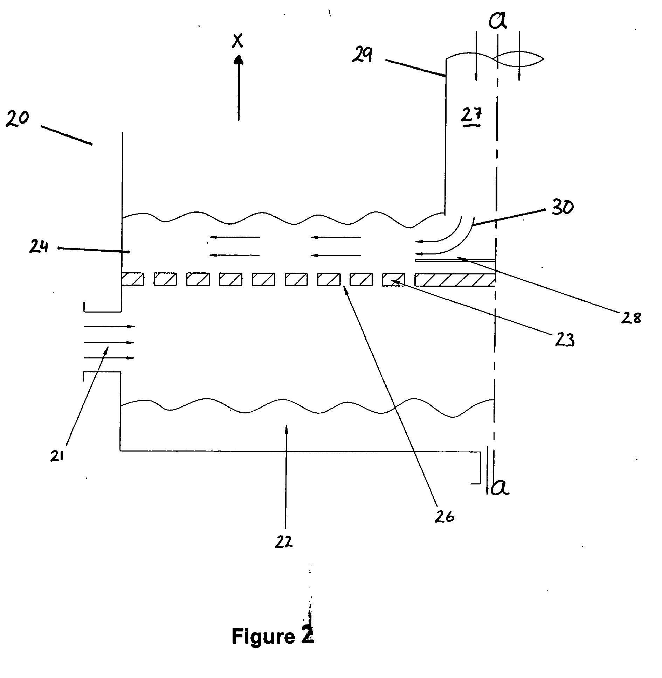

The scrubbing device 20 can be seen in more detail in Figure 2. The figure shows only one half of the scrubbing unit, the other half being a mirror image along the line a-a, except for the gas inlet 21. The plate 23 has a plurality of openings 26, or holes, there-through to allow the exhaust gas to pass through the plate 23. The holes 26 are designed so as to form a smooth orifice to minimise drag effects and hence pressure losses.

A seawater inlet 27 is provided to direct seawater in the form of a jet 28 over a surface of the plate 23 to form a stream of jetted seawater. The inlet has a pipe 29 which terminates in a nozzle 30 above the surface of the plate 23 such that its opening is close to the surface. The pipe 29 runs in the direction of the gas flow, so the seawater turns through a right angle as it leaves the inlet 27 and is jetted over the plate surface.

The seawater is jetted radially outwardly from the inlet 27 such that it flows generally transversely to the direction of flow of exhaust gas. The direction of flow of gas refers to the general movement of the gas through the device and is in the direction 'X' shown in Figure 2.

The relationship between the shape, size and distribution of the holes 26 in the plate 23, and the volumetric flow rate of seawater sprayed from the inlet 27 is such that a continuous layer of water to a specific depth would be formed in the recess in the absence of the exhaust gas flow. This arrangement is balanced with the flow rate of the gas through the plate 23, in use, to prevent the flow of seawater down through the holes 26, whilst maintaining a sufficient volume of seawater above the plate to prevent large volumes of gas flowing freely through the water without adequately mixing with the water.

For a gas flow of 6000m³ per hour, the plate 23 can have a diameter of 1 m and about 15% can be open, by way of holes 26. The holes can have a diameter of 5 mm and can be arranged on a 12 mm centre triangular pitch. The inlets to the holes, in this embodiment, have a 45° chamfer. This arrangement results in a pressure drop across the plate which maximises the gas throughput whilst satisfying other design constraints, such as the avoidance of plate weeping.

The scrubbing device 20 therefore provides a seawater flow rate which is sufficiently high as to cause a great deal of turbulent mixing of the gas with the water such that a bubble domain forms above the plate 23, ensuring that a significant surface area of seawater is available for contact with the exhaust gas.

In this embodiment, though not essential, partition walls 31 are provided adjacent the plate 23 to improve distribution and prevent sloshing of the liquid over the plate. The partition walls 31 extend perpendicularly to, and radially along the plate 23.

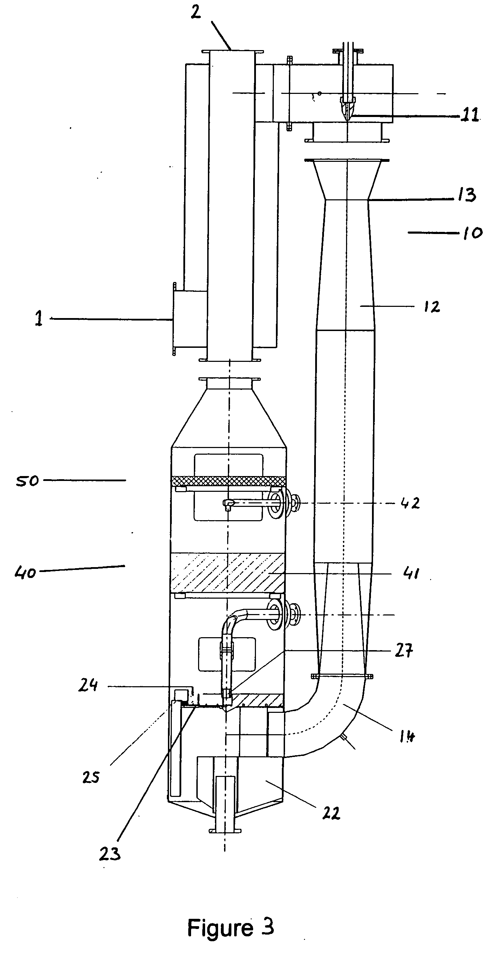

The scrubbing device 20 shown in Figure 1 can act as a bubbling device in a scrubbing system such as that shown in Figure 3.

The scrubbing system shown in Figure 3 has an exhaust gas inlet 1 and outlet 2, and three scrubbing devices arranged in series between the inlet and outlet. The inlet 1 passes exhaust gas to a quenching device 10, which passes gas to a bubbling device 20, which in turn passes gas to a polishing device 40. A de-mister 50 is arranged down-stream of the polishing device 40, followed by the outlet 2.

The quenching stage 10 includes a nozzle 11 (or other suitable spraying device) arranged to spray seawater into a conduit 12. From its mouth, the width of the conduit decreases in diameter, tapering to a narrow waist, which constitutes a constriction 13. From the constriction 13, the conduit 12 tapers outwardly, thus increasing the diameter of the conduit. The rate of decrease in diameter from the mouth to the constriction 13 is greater than the rate of increase in diameter downstream of the constriction. The increase in diameter of the conduit allows maximum pressure recovery, and the length of the conduit determines the residence time for the mixing process

The outlet 14 of the quenching device 10 opens into the sump 22 of the bubbling device 20 described above. The sump 22 collects used seawater from the quenching device 10.

Downstream of the bubbling device 20 is the polisher 40. The polisher includes a packing 41 comprising, for example, random metallic packing, which is wetted by seawater dispensed from a further spray 42. Other suitable materials for the packing are known to those skilled in the art. The polisher 40 can be a conventional polisher known in the art.

Between the polisher 40 and the exhaust gas outlet 2 is a de-mister 50 of conventional construction, such as a Knitted Mesh De-Mister, available from Knitwire Europe Ltd. The de-mister 50 removes seawater from the exhaust, thus preventing release into the atmosphere of seawater containing impurities.

The exhaust gas inlet 1 and outlet 2 form a heat exchanger to transfer heat from the hot gas entering the scrubbing system to the cooler gas leaving the scrubbing system. The outlet is a conduit running through a larger conduit which acts as the inlet to the system.

The scrubbing device 20 and system can be used with seawater to remove sulphur dioxide from a combustion engine exhaust gas. For example, hot exhaust gas containing sulphur dioxide from a combustion engine enters the scrubbing system through the inlet 1. As the gas passes into the quenching device 10, it is mixed with a spray of seawater. The seawater may be from the sea and may therefore be cold, or it may be from the engine cooling system and so may be already warm. In any case, the seawater is cooler than the hot exhaust gas and thus cools the gas down.

The mixture is caused to accelerate towards the constriction 13 due to the decreasing diameter of the conduit 12 towards the constriction.

Mixing of the gas and seawater during this stage results in contact of the gas with the seawater, and thus absorption of sulphur dioxide from the gas by the water.

The exhaust gas passes from the quenching device 10 to the bubbling device 20, pressurising the space in the sump 22 below the plate 23. The pressure below the plate 23 forces the gas through the holes 26 in the diffuser plate 23 and into the stream of transversely jetted seawater 28 in the recess 24. The turbulence caused by the gas encountering the water results in the gas and seawater mixing and forming bubbles above the plate surface. These bubbles provide a very large surface area for the gas to contact the seawater, resulting in excellent absorption of sulphur dioxide into the water.

The quenching, bubbling and polishing devices also remove heat and momentum from the gas.

When gas is released from the bubble domain, it passes into and through the wetted packing 41 of the polisher 40 where it encounters more seawater and therefore additional sulphur dioxide is absorbed.

After the polisher 40, the gas passes through the de-mister 50 and into the exhaust gas outlet 2. Seawater is blocked from passing into the outlet 2 by the de-mister 50.

Exhaust gas in the outlet 2 is heated by the hot exhaust gas entering the scrubbing system through the inlet 1, thus preventing condensation forming in the exhaust and minimising the formation of an exhaust plume.

About 50% of the sulphur dioxide is absorbed in the quenching device 10; after the bubbling device 20 about 90% has been absorbed; and after the polishing device 40 about 95% has been absorbed by the scrubbing system.

The scrubbing devices, particularly the quenching 10 and bubbling 20 devices, also act to remove particulate material from the exhaust gas, since the particulates become entrained in the seawater.

Variations of the specific example described above can be contemplated, such as by providing two quenching devices in series or in parallel in the gas stream, and/or two bubbling devices may be provided in series or in parallel in the gas stream. More than one scrubbing system may be combined, to increase scrubbing capacity. More than one nozzle may be used to spray the seawater during the different stages, or different spraying devices may be used.

The specific examples have been described with reference to the removal of sulphur dioxide from a combustion engine exhaust gas using seawater. The apparatus may, however, be used to remove other impurities in other applications using other suitable liquids into which the impurity can be absorbed. The impurities can be soluble in and/or reactive with the liquid. Other chemicals may be used in combination with the liquid. Also, the device and method may be another form of extraction or transfer device and method respectively, such as a gas stripping or dehumidification device and method.

The overall geometry of the devices may be of any section, such as circular, rectangular or others, as best suits the layout of the space available and the flow behaviour of the liquid stream. Materials of construction suitable for use with the gases and liquids involved in the process are known to the skilled artisan.

## Claims

1. An extraction device for a gas comprising a diffuser for transmitting a gas through a surface of the diffuser and means for jetting a stream of liquid over the surface such that the gas impacts the stream of liquid.

2. The device of claim 1, the device being a scrubbing device for scrubbing an impurity from the gas, the gas containing an impurity.

3. The device of claim 1 or claim 2, wherein the stream of liquid is jetted generally transversely to a direction of flow of the gas.

4. The device of any one of claims 1 to 3, wherein the stream of liquid is in contact with the surface.

5. The device of any one of the preceding claims, wherein the means for jetting the stream of liquid comprise at least one liquid inlet.

6. The device of claim 5, wherein the inlet has an opening for jetting liquid over the surface, the opening being located adjacent a central zone of the surface.

7. The device of claim 5 or claim 6, wherein the liquid is directed radially outwardly from the inlet.

8. The device of any one of claims 5 to 7, wherein the inlet is a nozzle or sprayer.

9. The device of any one of the preceding claims, wherein the diffuser is a plate having a plurality of openings extending through the plate, the plate being arranged generally perpendicularly to the direction of flow of the gas.

10. The device of any one of the preceding claims, further comprising a wall extending perpendicularly around a periphery of the diffuser, the diffuser and the wall co-operating to form a recess in which the stream of liquid is located.

11. The device of any one of the preceding claims, further comprising at least one partition located adjacent the plate, the partition extending parallel to the direction of flow of the gas.

12. A method of treating a gas comprising providing a diffuser, jetting a stream of liquid over a surface of the diffuser and transmitting a gas through the surface into the stream of liquid such that the gas impacts the stream of liquid causing turbulent mixing of the gas and the stream of liquid.

13. The method of claim 12, the method being a method of scrubbing an impurity from the gas, the gas containing an impurity.

14. The method of claim 12 or claim 13, wherein the stream of liquid is jetted transversely to a direction of flow of the gas.

15. The method of any one of claims 12 to 14, wherein the liquid is jetted such that it is in contact with the surface of the diffuser.

16. The method of any one of claims 12 to 15, wherein the liquid is jetted from at least one liquid inlet having an opening for jetting the liquid over the surface, the opening being located adjacent a central zone of the surface.

17. The method of claim 16, wherein the liquid is directed radially outwardly from the inlet.

18. The method of any one of claims 12 to 17, using the device of any one of claims 1 to 11.
